# EUROPÄISCHE PATENTSCHRIFT

(11) **EP 0 685 185 B1**
(45) Veröffentlichungstag und Bekanntmachung des Hinweises auf die Patenterteilung: **28.02.2001**
(21) Anmeldenummer: 95105109.3
(22) Anmeldetag: 05.04.1995
(51) Int. Cl.: A47B 9/20, A47B 17/03, A47B 9/04

(54) **Tisch mit beweglicher Platte**
Table with movable top
Table à plateau mobile

(30) Priorität: 18.05.1994 DE 4417337
(43) Veröffentlichungstag der Anmeldung: 06.12.1995
(73) Patentinhaber: Sedus Stoll AG, 79761 Waldshut-Tiengen (DE)
(72) Erfinder: Hurst, Siegfried, D-79725 Laufenburg (DE)
(74) Vertreter: Lück, Gert, Dr.

(56) Entgegenhaltungen:
- DE-A- 3 731 592
- DE-A- 3 835 717
- DE-U- 9 213 866
- GB-A- 2 262 030

## Beschreibung

Die Erfindung betrifft einen Tisch nach dem Oberbegriff des Anspruchs 1.

Es ist bekannt, Tische und Stühle derart auszubilden, dass die Tischplatte bzw. der Sitz und/oder die Lehne in der Höhe und/oder Neigung verstellt werden können, um das Möbel den ergonomischen Bedürfnissen des Benutzers anzupassen (z.B. EP-A-477 617, oder DE-A DE-A- 3833959).

Aehnlich ausgebildete Möbel sind auch aus den folgenden Druckschriften bekannt:

In dem DE-U-9213553.6 wird ein Tisch mit höhenverstellbarer Arbeitsplatte beschrieben, die von den Stützen zweier Standsäulen getragen wird. An den Standsäulen sind Höhenverstellvorrichtungen angeordnet, die drehfest an einer Verbindungswelle befestigte Zahnräder aufweisen, welche die Stützen über Zahnstangen auf und ab bewegen. Der Hubantrieb besteht aus einer Handkurbel und einem Schneckentrieb. Es sind Federelemente in Form von Gasfedern vorgesehen, die beim Absenken gespannt und beim Heben entspannt werden.

In dem DE-U-9011232.6 wird ein Stützbock mit teleskopartig bewegbaren Stützen beschrieben. Die Hubbewegung erfolgt mittels drehfest an einer Welle befestigten Zahnrädern , die in Oeffnungen eingreifen. Die Welle fungiert als mechanische Transmission.

Die DE-A-3214702 beschreibt ein höhenverstellbares Stativ für beispielsweise eine Tafel, wobei Gasfedern beim Absenken der Tafel gespannt, und beim Anheben derselben entspannt werden.

Das DE-U- 7501420.9 beschreibt die Höhenverstellung zum Beispiel einer Tischplatte mittels einer Schere und eines Spindeltriebes .

Aus der GB-A-2 262 030 ist ein Arbeitstisch vorzugsweise für behinderte Personen bekannt, bei welchem mittels Getriebemotoren die Höhe und/oder Neigung der Tischplatte verstellt werden kann. Für eine Synchronisierung der beiden Getriebemotoren für den Hub ist eine Welle vorgesehen, die über Hebelmechanismen beim Heben der Tischplatte in Rotation versetzt wird. Die Hebelmechanismen bestehen aus jeweils zwei Gliedern, die miteinander verbunden sind, und von denen das eine an der Tischplatte, und das andere an der Welle befestigt ist. Die beiden Getriebemotoren für die Neigung der Tischplatte werden über die Tischplatte synchronisiert.

Dieser bekannte Tisch hat zwar den Vorteil, dass beim Heben oder Neigen der Tischplatte diese sich wegen der Synchronisation so gleichmässig bewegt, dass ein Verkannten der Hub- bzw. Neigeelemente vermieden wird. Er ist jedoch - wie auch die anderen bekannten Tische mit heb- bzw. neigbarer Tischplatte - wegen des umständlichen und aufwendigen Hebelmechanismus für die Verwendung als Büro- oder Wohnmöbel nicht geeignet. Hinzukommt, dass der Hebelmechanismus nicht nur sehr unelegant aussieht, sondern auch für Produktion und Montage aufwendig und ungünstig ist.

Es ist daher die Aufgabe der Erfindung, den bekannten Tisch derart zu verbessern, dass er die genannten Nachteile nicht aufweist.

Diese Aufgabe wird durch die Merkmale des Anspruchs 1 gelöst.

Der Kern der Erfindung besteht darin, die Hub- und Neigevorrichtungen an den beiden Standsäulen mittels eigener elektrischer Getriebemotoren zu betreiben, die grundsätzlich weitgehend dezentral operieren, und die notwendige Synchronisation in einfachster Weise durch eine Welle herzustellen, die über Zahnräder mit Zahnungen an den Standsäulen kooperiert.

Dadurch ergibt sich nicht nur eine sehr aufwandsarme und damit kostengünstige Konstruktion, sondern auch eine sehr robuste und narrensicher synchronisierte Funktion der Antriebseinheiten.

Nachstehend wird die Erfindung anhand eines Ausführungsbeispieles näher erläutert.

Dabei zeigt
Fig.1 das Untergestell eines Tisches nach der Erfindung, und
Fig.2 den Querschnitt durch eine Standsäule eines Tisches nach der Erfindung.

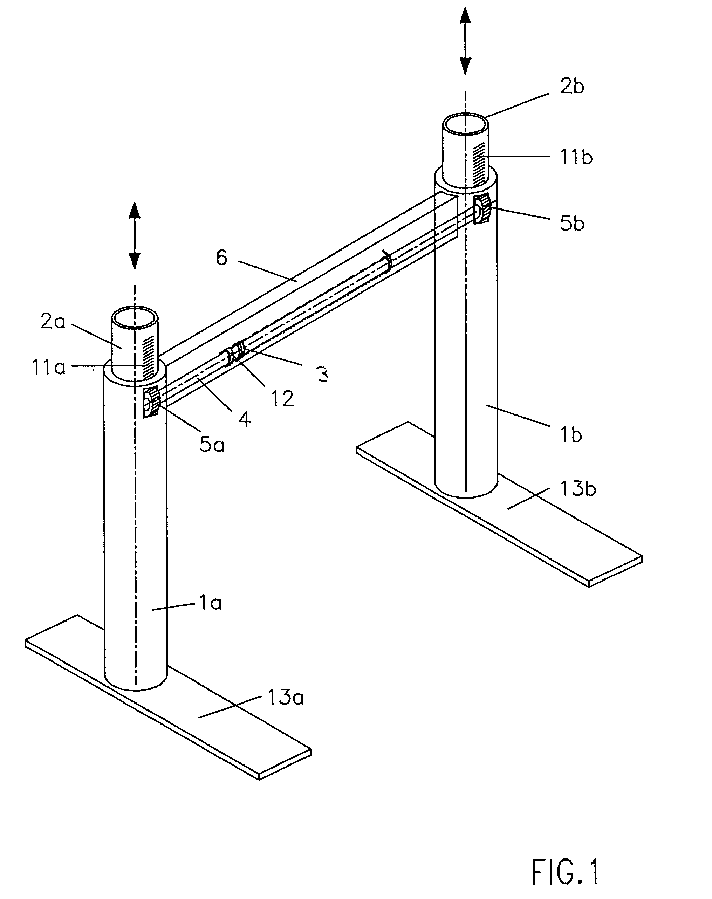

In Fig.1 ist das Untergestell eines Tisches nach der Erfindung dargestellt. Die Tischplatte ist weggelassen. Das Untergestell umfasst zwei Standsäulen, die jeweils aus einem Aussenrohr 1a, 1b und einem darin teleskopartig bewegbaren Innenrohr 2a, 2b bestehen. Die Füsse der Standsäulen sind mit 13a, 13b bezeichnet. Die beiden Säulen sind über die Traverse 6 miteinander verbunden.

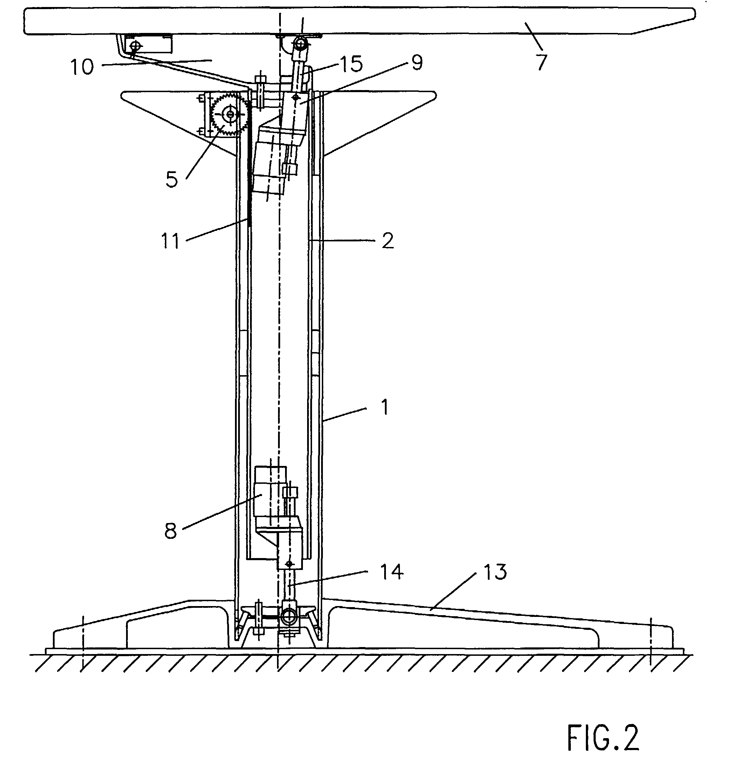

In Fig.2 ist im unteren Teil des Innenrohres 2 der Getriebemotor 8 dargestellt. Dieser besteht aus einem Elektromotor, der über ein nicht weiter im Detail gezeichnetes Getriebe eine Mutter mit Aussenzahnung antreibt, die von einer Spindel 14 durchtreten wird. Die Spindel 14 ist kardanisch am Fuss 13, der Getriebemotor 8 kardanisch am Innenrohr 2 der Standsäule befestigt.

Ein gleichartiger Getriebemotor 9 ist kardanisch am oberen Ende des Innenrohres 2 befestigt, wobei die über das Getriebe angetriebene Mutter von der Spindel 15 durchtreten wird. Diese Spindel 15 ist kardanisch an der Unterseite der Tischplatte 7 befestigt. Die Tischplatte 7 ist an ihrer Unterseite ausserdem schwenkbar am Tragarm 10 angelenkt, der an seinem anderen Ende starr mit dem Innenrohr 2 verbunden ist.

Wenn nun die Innenrohre 2a, 2b auf- oder abwärts bewegt werden sollen, so werden die Getriebemotoren 8a, 8b betätigt, und durch Rotation der Muttern laufen diese an den Spindeln 14a, 14b auf oder ab.

Dabei könnten jedoch die Innenrohre 2a, 2b, wie aus Fig.1 ersichtlich, verkanten und verklemmen, wenn sie unterschiedlich ein- oder ausgefahren werden, weil z.B. die Tischbelastung ungleich ist, und/oder die Motoren nicht ganz gleichmässig laufen. Diese Gefahr des Verkantens ist bei einem Tisch der in Rede stehenden Art besonders gross, weil die Innenrohre 2a, 2b möglichst knapp in die Aussenrohre 1a, 1b eingepasst sein müssen, um ein Wackeln der Tischplatte 7 auszuschliessen.

Um ein solches Verkanten oder Verklemmen der Innenrohre 2a, 2b auszuschliessen, ist die Welle 4 vorgesehen. Diese erstreckt sich entlang der Traverse 6, und weist an ihren Enden jeweils ein gegen Verdrehen gesichertes Zahnrad 5a, 5b auf. Die Zahnräder 5a, 5b sind jeweils beidseitig an den Aussenrohren 1a bzw. 1b der Standsäulen gelagert, und greifen formschlüssig in jeweils die Zahnung 11a bzw. 11b der Innenrohre 2a, 2b ein. Diese Zahnungen 11a, 11b sind auf der Aussenseite der Innenrohre 2a, 2b in deren Längsachse eingefräst.

Bewegen sich nun die Innenrohre 2a, 2b auf oder ab, so wird dadurch die Welle 4 über die Zahnräder 5a oder 5b in Rotation versetzt, wodurch eine absolut gleichmässige Bewegung der Innenrohre 2a, 2b gewährleistet ist, und das gefürchtete Verkanten vermieden wird.

Nach einem weiteren Gedanken der Erfindung ist auf der Welle 4 eine speziell gewickelte Feder 3 vorgesehen, die an ihrem linken Ende an der Traverse 6 befestigt ist. Die Feder besteht vorzugsweise aus Federstahl, z.B. vorphosphatiertem Draht, und weist z.B. 120 Windungen auf. An ihrem anderen Ende ist die Feder 3 an einem Ring 12 befetigt, der die Welle 4 umgreift, und um diese drehbar und an dieser fixierbar ist. Durch Drehen dieses Ringes 12 kann die Vorspannung der Feder 3 eingestellt werden.

Die Feder 3 ist nun auf der Welle 4 derart angebracht, dass sie aufgewickelt wird, wenn die Tischplatte 7 sich senkt, und abgewickelt, wenn die Tischplatte 7 sich hebt. Dadurch arbeitet die Feder 3 als Energiespeicher: Wenn die Tischplatte 7 sich senkt, so wird deren potentielle Energie in Verformungsenergie der Feder 3 umgewandelt, wenn sich die Tischplatte 7 jedoch hebt, wird die Verformungsenergie der Feder 3 frei, das Torsionsmoment der Feder 3 über die Zahnräder 5a, 5b auf die Innenrohre 2a, 2b übertragen, und damit die von den Getriebemotoren 8a, 8b zu erbringende Arbeit zur Vergrösserung der potentiellen Energie der Tischplatte 7 vermindert. Auf diese Weise können für die Getriebemotoren 8a, 8b Motoren bescheidener Leistung verwendet werden, was nicht nur kostengünstig ist, sondern auch Vorteile in bezug auf den Raumbedarf und die Integration der Motoren in den Standsäulen erbringt.

Die Synchronisation der Getriebemotoren 9a und 9b an den Tragarmen 10a und 10b erfolgt in ganz besonders einfacher Weise durch die Tischplatte 7 selbst.

Es mag noch erwähnt werden, dass die Standsäulen vorteilhaft aus Stahlrohr bestehen und die Füsse jeweils aus Aluminium-Druckguss.

Die erfindungsgemässe mechanische Synchronisation mit Energiespeicher macht es möglich, in jeder Standsäule eigene Getriebemotoren mit Hubspindeln zu integrieren, die getrennt arbeiten, ohne dass es jedoch bei ungleichmässiger Tischbelastung oder ungleichmässigen Lauf der Motoren zum Verklemmen der Teleskoprohre kommt.

Durch geeignete Vorspannung der Feder kann der durch den Energiespeicher erzielte Gewichtsausgleich der jeweiligen Belastung der Tischplatte angepasst werden.

### Bezugszeichen

- 1a, 1b: Aussenrohr der Standsäule
- 2a, 2b: Innenrohr der Standsäule
- 3: Energiespeicher/Feder
- 4: Welle
- 5a, 5b: Zahnrad
- 6: Traverse
- 7: Tischplatte
- 8a, 8b: Getriebemotor zur Bewegung des Innenrohres
- 9a, 9b: Getriebemotor zur Neigung der Tischplatte
- 10a,10b: Tragarm
- 11a,11b: Zahnung am Innenrohr
- 12: Ring zur Vorspannung der Feder
- 13a,13b: Fuss der Standsäule
- 14a,14b: Spindel des Getriebemotors zur Bewegung des Innenrohres
- 15a,15b: Spindel des Getriebemotors zur Bewegung der Tischplatte

## Patentansprüche

1. Tisch, vorzugsweise Büro-Arbeitstisch, mit einer heb- und neigbaren Tischplatte (7) und einem Tisch-Unterteil mit zwei Standsäulen, die jeweils aus einem Aussenrohr (1a, 1b) und einem darin teleskopartig beweglichen Innenrohr (2a, 2b) bestehen, wobei an der linken und der rechten Außenseite des Tisches jeweils ein elektrischer Getriebemotor (8a, 8b) mit Hubspindel zum Heben der Tischplatte (7) und jeweils ein elektrischer Getriebemotor (9a, 9b) zum Neigen der Tischplatte (7) vorgesehen ist, und wobei die beiden Getriebemotoren (8a, 8b) für den Hub durch eine Welle (4), und die beiden Getriebemotoren (9a, 9b) für die Neigung durch die Tischplatte (7) synchronisiert sind, **dadurch gekennzeichnet, daß** die Getriebemotoren (8a, 8b; 9a, 9b) in den Innenrohren (2a, 2b) angeordnet sind, und die Welle (4) an ihren beiden Enden jeweils ein Zahnrad (5a, 5b) aufweist, das in jeweils eine am entsprechenden Innenrohr (2a, 2b) vorgesehene, sich in Längsrichtung erstreckende Zahnung (11a, 11b) eingreift, derart, dass eine Lateralbewegung der Innenrohre (2a, 2b) eine Rotation der Welle (4) bewirkt.

2. Tisch nach Anspruch 1, dadurch gekennzeichnet, dass die Rotation der Welle (4) auf eine Feder (3) wirkt, derart, dass die Feder (3) bei einem Absenken der Tischplatte (7) gespannt, und bei einem Heben der Tischplatte (7) entspannt wird.

3. Tisch nach Anspruch 2, dadurch gekennzeichnet, dass die Feder (3) eine Spiralfeder ist, die die Welle (4) umfasst, und sich in Abhängigkeit von der Rotation der Welle (4) auf- oder abwickelt.

4. Tisch nach Ansprüch 3, dadurch gekennzeichnet, dass die Feder (3) eine einstellbare Vorspannung aufweist.

5. Tisch nach Anspruch 4, dadurch gekennzeichnet, dass die Vorspannung mittels eines auf der Welle verdreh- und fixierbaren Ringes (12) einstellbar ist.

## Claims

1. Table, preferably office work table, having a table top (7) which can be raised and inclined, and having a table substructure with two uprights which each comprise an outer tube (la, lb) and an inner tube (2a, 2b) which can be moved telescopically in the outer tube, there being provided, on the left-hand and the right-hand outer side of the table, in each case one electric geared motor (8a, 8b) with a lifting spindle for raising the table top (7) and in each case one electric geared motor (9a, 9b) for inclining the table top (7), and the two geared motors (8a, 8b) for the lifting action being synchronized by a shaft (4) and the two geared motors (9a, 9b) for the inclining action being synchronized by the table top (7), characterized in that the geared motors (8a, 8b; 9a, 9b) are arranged in the inner tubes (2a, 2b) and the shaft (4) has, at its two ends, in each case one gear wheel (5a, 5b) which engages in each case in a toothing arrangement (lla, llb), which is provided on the corresponding inner tube (2a, 2b) and extends in the longitudinal direction, such that a lateral movement of the inner tubes (2a, 2b) causes the shaft (4) to rotate.

2. Table according to Claim 1, characterized in that the rotation of the shaft (4) acts on a spring (3) such that the spring (3) is subjected to stressing when the table top (7) is lowered and is relieved of stressing when the table top (7) is raised.

3. Table according to Claim 2, characterized in that the spring (3) is a helical spring which encloses the shaft (4) and winds up or unwinds in dependence on the rotation of the shaft (4).

4. Table according to Claim 3, characterized in that the spring (3) has adjustable prestressing.

5. Table according to Claim 4, characterized in that the prestressing can be adjusted by means of a ring (12) which can be rotated and fixed on the shaft.

## Revendications

1. Table, de préférence table de travail de bureau, comprenant un plateau (7) de table soulevable et inclinable et une partie inférieure de la table avec deux colonnes de support qui se composent chacune d'un tube extérieur (la, lb) et d'un tube intérieur (2a, 2b) déplaçable de manière télescopique à l'intérieur de celui-ci, une motoréducteur électrique (8a, 8b) respectif avec une broche de levage pour le soulèvement du plateau (7) de la table et un motoréducteur électrique (9a, 9b) respectif pour l'inclinaison du plateau (7) de la table étant prévus du côté extérieur gauche et du côté droit de la table, et les deux motoréducteurs (8a, 8b) pour le levage étant synchronisés par un arbre (4), et les deux motoréducteurs (9a, 9b) pour l'inclinaison étant synchronisés par le plateau (7) de la table, **caractérisée en ce que** les motoréducteurs (8a, 8b ; 9a, 9b) sont disposés dans les tubes intérieurs (2a, 2b) et l'arbre (4) présente à ses deux extrémités dans chaque cas une roue dentée (5a, 5b) qui vient en prise dans chaque cas dans une denture (11a, 11b) s'étendant dans la direction longitudinale et prévue dans le tube intérieur correspondant (2a, 2b), de telle sorte qu'un mouvement latéral des tubes intérieurs (2a, 2b) provoque une rotation de l'arbre (4).

2. Table selon la revendication 1, caractérisée en ce que la rotation de l'arbre (4) agit sur un ressort (3) de telle sorte que le ressort (3) soit tendu lors d'un abaissement du plateau (7) de la table et soit détendu lors d'un soulèvement du plateau (7) de la table.

3. Table selon la revendication 2, caractérisée en ce que le ressort (3) est un ressort spiral qui entoure l'arbre (4) et s'enroule ou se déroule en fonction de la rotation de l'arbre (4).

4. Table selon la revendication 3, caractérisée en ce que le ressort (3) présente une précontrainte ajustable.

5. Table selon la revendication 4, caractérisée en ce que la précontrainte est ajustable au moyen d'une bague (12) pouvant tourner et être fixée sur l'arbre.
